Europäisches Patentamt

European Patent Office

Office européen des brevets

(19)

(11) **EP 0 915 137 A1**

(12) **EUROPÄISCHE PATENTANMELDUNG**

(43) Veröffentlichungstag:
    **12.05.1999 Patentblatt 1999/19**

(51) Int. Cl.⁶: **C09D 11/00**

(21) Anmeldenummer: 98120205.4

(22) Anmeldetag: 24.10.1998

(84) Benannte Vertragsstaaten:
    **AT BE CH CY DE DK ES FI FR GB GR IE IT LI LU
    MC NL PT SE**
    Benannte Erstreckungsstaaten:
    **AL LT LV MK RO SI**

(30) Priorität: **06.11.1997 DE 19749082**

(71) Anmelder:
    **Bayer Aktiengesellschaft
    51368 Leverkusen (DE)**

(72) Erfinder:
    • **Gonzales-Blanco, Juan Dr.
      50937 Köln (DE)**
    • **Hoheisel, Werner Dr.
      51061 Köln (DE)**
    • **Nyssen, Peter Roger
      41542 Dormagen (DE)**
    • **Pfützenreuter, Dirk
      51399 Burscheid (DE)**

(54)     **Nanoskalige anorganische Pigmente enthaltende Ink-Jet Tinten**

(57)     Pigmentpräparationen, enthaltend

a) wenigstens ein Pigment aus der Gruppe der Carbide, Nitride, Boride und Silicide der Elemente Ti, Zr, Hf, Si, Ge und Sn mit einer mittleren Primärpartikelgröße von 0,1 bis 50 nm,

b) wenigstens ein Dispergiermittel mit einem mittleren Molekulargewicht von $M_w > 1.000$ und

c) Wasser,
eignen sich besonders als Tinten für den Ink-Jet-Druck.

EP 0 915 137 A1

**Beschreibung**

Die Erfindung betrifft nanoskalige anorganische Pigmente enthaltende Pigmentpräparationen, Verfahren zu ihrer Herstellung sowie ihre Verwendung als Tinte für den Ink-Jet-Druck.

Für den Ink-Jet-Druck werden als Farbmittel sowohl wasserlösliche Farbstoffe als auch organische Farbpigmente sowie Ruße eingesetzt. Organische Farbstoffe ergeben im allgemeinen farbstarke Drucke mit hoher Brillanz, besitzen jedoch gegenüber Farbpigmenten häufig eine schlechtere Lichtechtheit. Organische Pigmente besitzen oft den Nachteil mangelnder Brillanz und/oder Transparenz, und die Lichtechtheit ist für verschiedene Anwendungen, z.B. für Außenanwendungen, noch nicht ausreichend. Besonders auf dem Gebiet der schwarzen Ink-Jet-Farbmittel erfüllen sowohl organische Farbstoffe als auch anorganische Farbpigmente und Ruße noch nicht die gewünschten Eigenschaften im Hinblick auf hohe optische Dichte und Lichtechtheit.

So sind beispielsweise aus JP-A-62 179 579 Titannitrid-haltige Pigmentpräparate beschrieben, wobei das eingesetzte TiN nach Bekanntgabe durch den Hersteller einen mittleren Teilchendurchmesser von > 0,7 μm besitzt.

Aufgabe der vorliegenden Erfindung ist es, wäßrige Pigmentpräparationen zur Verwendung als Ink-Jet-Tinten bereitzustellen, mit denen man Drucke mit verbesserter Lichtechtheit bei gleichzeitig hoher optischer Dichte erzeugen kann.

Die Erfindung betrifft Pigmentpräparationen, enthaltend

a) wenigstens ein Pigment aus der Gruppe der Carbide, Nitride, Boride und Silicide der Elemente Ti, Zr, Hf, Si, Ge und Sn mit einer mittleren Primärteilchengröße von 0,1 bis 50 nm,

b) wenigstens ein Dispergiermittel mit einem mittleren Molekulargewicht (Mw) von > 1.000, vorzugsweise von Mw > 1.000 bis 500.000 und

c) Wasser.

Pigment

Die mittlere Primärpartikelgröße der Pigmente kann mit Hilfe von elektronenmikroskopischen Aufnahmen bestimmt werden. Sie beträgt vorzugsweise 0,5 bis 50 nm, insbesondere 0,5 bis 30 nm. Die Primärpartikel der Pigmente besitzen vorzugsweise eine sphärische Struktur. Sie können auch in Form ihrer Agglomerate bzw. Aggregate vorliegen, wobei diese eine mittlere Teilchengröße von weniger als 500 nm, bevorzugt weniger als 150 nm besitzen.

Die einzusetzenden Pigmente können kristallin oder amorph sein, vorzugsweise kristallin.

Besonders bevorzugte Pigmente sind ZrN (violett), TiN (blauschwarz), TiC (braunschwarz) und SiC (gelb-orange).

Die nanoskaligen Pigmente können beispielsweise nach den in EP-A-650 945 und US-A-5.472.477 beschriebenen Verfahren erhalten werden. Dabei wird bevorzugt das CVR-(chemical vapor reaction)Verfahren verwendet, womit sich Teilchen mit einer sehr engen Größenverteilung überkornfrei und mit hoher Reinheit herstellen lassen.

Charakteristisch für die so hergestellten Pigmente, vorzugsweise in Form ihrer Pulver, ist das vollständige Fehlen von Primärpartikeln, die wesentlich größer als die Durchschnittspartikelgröße sind. So weisen die Pulver weniger als 1 % Primärpartikel auf, die mehr als 20 % von der mittleren Partikelgröße abweichen; Primärpartikel, die mehr als 50 % abweichen, sind praktisch nicht vorhanden.

Die in den erfindungsgemäßen Pigmentpräparationen enthaltenen Pigmente a) können entweder in Form ihrer Primärpartikel, Agglomerate bzw. Aggregate von Primärpartikeln oder Mischungen der beiden vorliegen. Als Agglomerate bzw. Aggregate seien Teilchen verstanden, in denen mehrere Primärpartikel über van-der-Waals-Kräfte miteinander in Wechselwirkung stehen, oder in denen die Primärpartikel durch Oberflächenreaktion oder „Versinterung" während des Herstellungsverfahrens miteinander verbunden sind.

Die eingesetzten Pigmente können äußerst geringe Sauerstoffgehalte von weniger als 10 Gew.-%, bezogen auf den Feststoff, vorzugsweise weniger als 1%, insbesondere weniger als 0.1 Gew.-% aufweisen. Charakteristisch weiterhin ist ihre hohe Reinheit und Oberflächenreinheit. Bedingt durch das Herstellungsverfahren können die einzusetzenden Pigmente sehr luftempfindlich oder sogar pyrophor sein. Um diese Eigenschaft zu beseitigen, können die Pigmente vor dem Einsatz in den erfindungsgemäßen Pigmentpräparationen in definierter Weise durch Beaufschlagung mit Gas/Dampfgemischen oberflächenmodifiziert bzw. oxidiert oder passiviert werden.

Als farbgebendes Pigment für die erfindungsgemäßen Präparationen sind Pigmente wie TiN, mit einer Gesamtteilchengröße von kleiner als 500 nm geeignet, bevorzugt kleiner als 150 nm, besonders bevorzugt zwischen 2 nm und 50 nm. Beispielhafte Werte (Extinktionskoeffizienten) für z.B. TiN-Nanoteilchen mit einem Durchmesser von 10 nm sind 15 $l*g^{-1}*cm^{-1}$ bei $\lambda$ = 440 nm und 65 $l*g^{-1}*cm^{-1}$ bei $\lambda$ = 760 nm. Für TiN-Nanoteilchen mit einem Durchmesser von 100 nm sind 12 $l*g^{-1}*cm^{-1}$ bei $\lambda$ = 450 nm und 50 $l*g^{-1}*cm^{-1}$ bei $\lambda$ = 800 nm.

Ähnliche Eigenschaften wie TiN besitzt auch ZrN. Gegenüber TiN liegt die Resonanzwellenlänge und somit das Absorptionsmaximum bei kürzeren Wellenlängen im grünen Bereich, so daß sich in verdünnten Dispersionen ein violetter Farbeindruck ergibt. Ähnlich zu TiN sind ZrN-Nanoteilchen als farbgebendes Pigment mit einer Gesamtteilchengröße von kleiner als 300 nm geeignet, bevorzugt kleiner als 100 nm, besonders bevorzugt zwischen 2 nm und 50 nm.

Das Pigment der Komponente a) wird vorzugsweise in einer Menge von 0.05-80 Gew.%, insbesondere von 0.1 bis 30 Gew.-%, besonders bevorzugt von 0,5-20 Gew.%, bezogen auf die Präparation, eingesetzt.

Dispergiermittel

Als Dispergiermittel werden Moleküle mit einer Molmasse von größer 1 000 bis 500 000, bevorzugt größer 1 000 bis 100 000 und insbesondere größer 1 000 bis 10 000 g/mol angesehen. Die Dispergiermittel können nichtionische, anionische, kationische oder amphotere Verbindungen sein.

Als nichtionische Dispergiermittel sind beispielsweise zu nennen: Alkoxylate, Alkylolamide, Ester, Aminoxide und Alkylpolyglykoside.

Als nichtionische Dispergiermittel kommen weiterhin in Frage: Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, wie Styrol-Phenol-Kondensate, Carbonsäureamiden und Harzsäuren. Hierbei handelt es sich z.B. um Ethylenoxidaddukte aus der Klasse der Umsetzungsprodukte von Ethylenoxid mit:

a) gesättigten und/oder ungesättigten Fettalkoholen mit 6 bis 20 C-Atomen oder

b) Alkylphenolen mit 4 bis 12 C-Atomen im Alkylrest oder

c) gesättigten und/oder ungesättigten Fettaminen mit 14 bis 20 C-Atomen oder

d) gesättigten und/oder ungesättigten Fettsäuren mit 14 bis 20 C-Atomen oder

e) hydrierten und/oder unhydrierten Harzsäuren.

Als Ethylenoxid-Addukte kommen insbesondere die unter a) bis e) genannten alkylierbaren Verbindungen mit 5 bis 120, vorzugsweise 5 bis 60, insbesondere 5 bis 30 Mol Ethylenoxid in Frage.

Besonders bevorzugt sind nichtionische polymere Dispergiermittel.

Als polymere Dispergiermitteln sind beispielsweise die Verbindungen, die im Verzeichnis „Water-Soluble Synthetic Polymers: Properties and Behavior" (Volume I + II by Philip Molyneux, CRC Press, Florida 1983/84) genannt sind, anzusehen.

Weitere polymere Dispergiermittel sind beispielsweise wasserlösliche sowie wasseremulgierbare Verbindungen in Frage, z.B. Homo- und Copolymerisate, Pfropf- und Pfropfcopolymerisate sowie statistische Blockcopolymerisate.

Besonders bevorzugte polymere Dispergiermittel sind beispielsweise AB-, BAB- und ABC-Blockcopolymere. In den AB- oder BAB-Blockcopolymeren ist das A-Segment ein hydrophobes Homopolmyer oder Copolymer, das eine Verbindung zum Pigment sicherstellt und der B-Block ein hydrophiles Homopolymer oder Copolymer oder ein Salz davon und stellt das Dispergieren des Pigmentes im wäßrigen Medium sicher. Derartige polymere Dispergiermittel und deren Synthese sind beispielsweise aus EP-A-518 225 sowie EP-A-556 649 bekannt.

Weitere Beispiele geeigneter polymerer Dispergiermittel sind Polyethylenoxide, Polypropylenoxide, Polyoxymethylene, Polytrimethylenoxide, Polyvinylmethylether, Polyethylenimine, Polyacrylsäuren, Polyarylamide, Polymethacrylsäuren, Polymethacrylamide, Poly-N,N-dimethyl-acrylamide, Poly-N-isopropylacrylamide, Poly-N-acrylglycinamide, Poly-N-methacrylglycinamide, Polyvinylalkohole, Polyvinylacetate, Copolymere aus Polyvinylalkoholen und Polyvinylacetaten, Polyvinylpyrrolidon, Polyvinyloxazolidone, Polyvinylmethyloxazolidone.

Weiterhin sind natürliche polymere Dispergiermittel wie Cellulose, Stärke, Gelatine oder deren Derivate als polymere Dispergiermittel von Bedeutung. Besonders kommen Polymere aus Aminosäureeinheiten z.B. Polylysin, Polyasparaginsäure usw. in Frage.

Als anionische Dispergiermittel sind beispielsweise zu nennen: Alkylsulfate, Ethersulfate, Ethercarboxylate, Phosphatester, Sulfosucinate, Sulfosuccinatamide, Paraffinsulfonate, Olefinsulfonate, Sarcosinate, Isothionate, Taurate und Ligninische Verbindungen.

Besonders bevorzugt sind anionische, polymere Dispergiermittel.

Geeignete anionische polymere Dispergiermittel sind insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit.

Weiterhin kommen in Frage Kondensationsprodukte, die durch Umsetzung von Naphtholen mit Alkanolen, Anlagerung von Alkylenoxid und mindestens teilweiser Überführung der terminalen Hydroxygruppen in Sulfogruppen oder Halbester der Maleinsäure, Phthalsäure oder Bernsteinsäure erhältlich sind.

Geeignet sind außerdem Dispergiermittel aus der Gruppe der Sulfobernsteinsäureester sowie Alkylbenzolsulfonate. Außerdem sulfatierte, alkoxylierte Fettsäurealkohole oder deren Salze. Als alkoxylierte Fettsäurealkohole werden insbesondere solche mit 5 bis 120, vorzugsweise 5 bis 60, insbesondere mit 5 bis 30 Ethylenoxid versehene $C_6$-$C_{22}$-Fettsäurealkohole, die gesättigt oder ungesättigt sind, insbesondere Stearylalkohol, verstanden. Besonders bevorzugt ist ein mit 8 bis 10 Ethylenoxideinheiten alkoxylierter Stearylalkohol. Die sulfatierten alkoxylierten Fettsäurealkohole liegen vorzugsweise als Salz, insbesondere als Alkali oder Aminsalze, vorzugsweise als Diethylaminsalz vor.

Weitere Beispiele für anionische, polymere Dispergiermittel sind die Salze der Polyacrylsäuren, Polyethylensulfonsäuren, Polystyrolsulfonsäure, Polymethacrylsäuren, Polyphosphorsäuren.

Zusätzliche Beispiele für anionische, polymere Dispergiermittel sind Copolymerisate acrylischer Monomeren, die beispielhaft in folgender Tabelle durch Kombination folgender Monomere angegeben sind, die zu statistischen, alternierenden oder Pfropfcopolymeren synthetisiert werden:

| | |
|---|---|
| Acrylamid | , Acrylsäure; |
| Acrylamid, | Acrylnitril; |
| Acrylsäure, | N-Acrylglycinamid; |
| Acrylsäure, | Ethylacrylat; |
| Acrylsäure, | Methylacrylat; |
| Acrylsäure, | Methylenbutyrolactam; |
| N-Acrylglycinamid, | N-Isopropylacrylamid; |
| Methacrylamid, | Methacrylsäure; |
| Methacrylsäure, | Benzylmethacrylat; |
| Methacrylsäure, | Diphenylmethylmethacrylat; |
| Methacrylsäure, | Methylmethacrylat; |
| Methacrylsäure, | Styrol; |

Weitere anionische, polymere Dispergiermittel sind Styrolmaleinsäureanhydrid-Copolymere, deren Copolymere mit den genannten acrylischen Monomeren, sowie Polymere auf Polyurethanbasis.

Ferner kommen Pfropfpolymere und Pfropf-Copolymere infrage, bei denen anionogene Vinylmonomere auf eine polymere Grundlage aufgepfropft sind. Als polymere Grundlage können synthetische oder natürliche Schutzkolloide dienen.

Weiterhin kommen vor allem Ligninsulfonate in Betracht, z.B. solche, die nach dem Sulfit- oder Kraft-Verfahren gewonnen werden. Vorzugsweise handelt es sich um Produkte, die zum Teil hydrolysiert, oxidiert, propoxyliert, sulfoniert, sulfomethyliert oder disulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht von größer 1000 bis 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.

Als kationische Dispergiermittel sind beispielsweise zu nennen: quartenäre Alkylammoniumverbindungen und Imidazole.

Besonders bevorzugt sind kationische, polymere Dispergiermittel.

Beispiele für kationische, polymere Dispergiermittel sind die Salze der Polyethylenimine, Polyvinylamine, Poly(2-vinylpyridine), Poly(4-vinylpyridine), Poly(diallyldimethylammonium)chlorid, Poly(4-vinylbenzyltrimethylammonium)salze, Poly(2-vinylpiperidin).

Als amphotere Dispergiermittel sind beispielsweise zu nennen: Betaine, Glycinate, Propionate und Imidazoline.

Anionische und kationische Polymere werden als Polyelektrolyte zusammengefaßt und sind in einer wäßrigen und/oder organischen Phase partiell oder vollständig dissoziierbar.

Die Erfindung betrifft weiterhin Pigmentpräparationen, enthaltend

a) wenigstens ein Pigment aus der Gruppe der Carbide, Nitride, Boride und Silicide der Elemente Ti, Zr, Hf, Si, Ge und Sn mit einer mittleren Primärpartikelgröße von 0,1 bis 50 nm,

b) wenigstens ein Dispergiermittel mit einem mittleren Molekulargewicht von Mw kleiner gleich 1.000, ausgewählt

aus der Gruppe der anionischen Dispergiermittel der Sulfobernsteinsäureester, Alkylbenzolsulfonate, sulfatierte, alkoxylierte Fettsäurealkohole oder deren Salze, Ethersulfate, Ethercarboxylate, Phosphatester, Sulfosuccinatamide, Paraffinsulfonate, Olefinsulfonate, Sarcosinate, Isethionate, Taurate, Ligninische Verbindungen, Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit sowie Kondensationsprodukte, die durch Umsetzung von Naphtholen mit Alkanolen, Anlagerung von Alkylenoxid und mindestens teilweiser Überführung der terminalen Hydroxygruppen in Sulfogruppen oder Halbester der Maleinsäure, Phthalsäure oder Bernsteinsäure erhältlich sind sowie Polymere aus Aminosäureeinheiten, insbesondere Polylysin oder Polyasparaginsäure,

aus der Gruppe der kationischen Dispergiermittel, quarternäre Alkylammoniumverbindungen und Imidazole,

aus der Gruppe der amphoteren Dispergiermittel der Glycinate, Propionate und Imidazoline und

aus der Gruppe der nichtionischen Dispergiermittel der Alkoxylate, Alkylolamide, Ester, Aminoxide, Alkylpolyglykoside und Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, wie Styrol-Phenol-Kondensate, Carbonsäureamiden und Harzsäuren. Hierbei handelt es sich z.B. um Ethylenoxidaddukte aus der Klasse der Umsetzungsprodukte von Ethylenoxid mit:

a) gesättigten und/oder ungesättigten Fettalkoholen mit 6 bis 20 C-Atomen oder

b) Alkylphenolen mit 4 bis 12 C-Atomen im Alkylrest oder

c) gesättigten und/oder ungesättigten Fettaminen mit 14 bis 20 C-Atomen oder

d) gesättigten und/oder ungesättigten Fettsäuren mit 14 bis 20 C-Atomen oder

e) hydrierten und/oder unhydrierten Harzsäuren.

Als Ethylenoxid-Addukte kommen insbesondere die unter a) bis e) genannten alkylierbaren Verbindungen mit 5 bis 120, vorzugsweise 5 bis 60, insbesondere 5 bis 30 Mol Ethylenoxid in Frage.

Das eingesetzte Dispergiermittel wird vorzugsweise in einer Menge von 0,1 bis 200 Gew.-%, insbesondere 0,5 bis 100 Gew.-%, bezogen auf die Summe der eingesetzten Pigmente verwendet.

Die erfindungsgemäßen Präparationen können weiterhin organische Lösungsmittel der Komponente d) enthalten.

Geeignete organische Lösungsmittel (d) sind: aliphatische $C_1$-$C_4$-Alkohole, wie Methanol, Ethanol, Isopropanol, n-Propanol, n-Butanol, Isobutanol oder tert.-Butanol, aliphatische Ketone, wie Aceton, Methylethylketon, Methylisobutylketon oder Diacetonalkohol, Polyole, wie Ethylenglykol, Propylenglykol, Butylenglykol, Diethylenglykol, Triethylenglykol, Trimethylolpropan, Polyethylenglykol mit einem mittleren Molgewicht von 100 bis 4000, vorzugsweise 400 bis 1500 g/mol oder Glycerin, Monohydroxyether, vorzugsweise Monohydroxyalkylether, besonders bevorzugt Mono-$C_1$-$C_4$-alkylglykolether wie Ethylenglykolmonoalkyl-, -monomethyl-, -diethylenglykolmonomethylether oder Diethylenglykolmonoethylether, Diethylenglykolmonobutylether, Dipropylenglykolmonoethylether, Thiodiglykol, Triethylenglykolmonomethylether oder -monoethylether, ferner 2-Pyrrolidon, N-Methyl-2-pyrrolidon, N-Ethyl-pyrrolidon, N-Vinyl-pyrrolidon, 1,3-Dimethyl-imidazolidon, Dimethylacetamid sowie Dimethylformamid.

Es kommen auch Gemische der erwähnten Lösungsmittel in Betracht.

Die Menge des organischen Lösungsmittels beträgt vorzugsweise 1 bis 40, insbesondere 2 bis 20 Gew.-%, bezogen auf die Pigmentpräparationen.

Bevorzugt beträgt die Menge an Wasser und organischem Lösungsmittel 20 bis 99 Gew.-%, vorzugsweise 30 bis 97 Gew.-%, bezogen auf die Pigmentpräparationen.

Die erfindungsgemäßen Pigmentpräparationen können zusätzlich zu dem eingesetzten Dispergiermittel weitere kationische, anionische, amophotere und/oder nicht-ionische grenzflächenaktive Verbindungen enthalten, beispielsweise solche, die im Verzeichnis „Surfactants Europa, A. Directory of Surface Acitive Agents available in Europe" (Edited by Gordon L. Hollis, Royal Socity of Chemistry, Cambridge (1995) aufgeführt werden.

Sofern das eingesetzte Dispergiermittel ionische Gruppe enthält, sollten diese Hilfsmittel vorzugsweise nicht-ionogen oder von gleicher Ionogenität sein.

Als weiterer Zusatz sind Verbindungen aus der Gruppe der Terpene, Terpenoide, Fettsäuren und Fettsäureester zu nennen. Bevorzugt sind dabei die nachfolgend genannten Verbindungen:

Ocimen, Myrcen, Geraniol, Nerol, Linalool, Citronellol, Geranial, Citronellal, Neral, Limonen, Menthol, beispielsweise (-)-Menthol, Menthon oder bicycliche Monoterpene, gesättigte und ungesättigte Fettsäuren mit 6 bis 22 C-Atomen wie beispielsweise Stearinsäure, Ölsäure, Linolsäure und Linolensäure oder Mischungen davon.

In einer weiteren bevorzugten Ausführungsform enthalten die erfindungsgemäßen Pigmentpräparationen neben einem Pigment der Komponente a) und einem Dispergiermittel der Komponente b) weitere Farbmittel der Komponente e).

Als solche Farbmittel kommen beispielsweise andere organische und anorganische Pigmente sowie Ruß in Frage.

Als Ruße können insbesondere saure bis alkalische Ruße aus der Gruppe Furnace- oder Gas-Ruße sowie chemisch oder physikalisch modifizierte oder nachbehandelte Ruße genannt werden, weiterhin anorganische Pigmente, wie beispielsweise Zinksulfide, Ultramarin, Eisenoxide, Kobaltblau sowie Chromoxidpigmente sowie Pigmente in Form fein partikulärer Oxide wie Siliziumdioxid, Titandioxid, Nickeloxide, Aluminiumoxid sowie fein partikuläre Metalle wie Kupfer, Eisen oder Aluminium und organische Farbpigmente wie beispielsweise solche der Azo-, Disazo-, Polyazo-, Anthrachinon-, Thioindigoreihe, ferner andere polycyclische Pigmente wie beispielsweise aus der Phthalocyanin-, Chinacridon-, Dioxazin-, Isoindolinon-, Naphthalintetracarbonsäure- und Perylen- und Perylentetracarbonsäurereihe, ferner solche aus der Perinon-, Indigoid-, Thioindigoid- und Diketopyrrolopyrrol-Reihe, sowie Metallkomplex-Pigmente von Azo-, Azomethin- oder Methinfarbstoffen oder verlackte Farbstoffe wie Ca-, Mg-, Al-Lacke von sulfonsäure- und/oder carbonsäuregruppenhaltigen Farbstoffen.

Weiterhin mögliche Farbmittel sind in Wasser lösliche organische Farbstoffe oder Weißtöner, wie z.B. saure und basische Farbstoffe oder auch in Wasser unlösliche Farbstoffe wie z.B. Dispersionsfarbstoffe genannt. Als Beispiele für Dispersionsfarbstoffe seien solche aus der Azo-, Disazo-, Anthrachinon-, Cumarin-, Isoindolenin-, Chinolin- und Methinreihe genannt.

Bevorzugt werden diese zusätzlichen Farbmittel der Komponente e) in einer Menge von 0 bis 80 Gew.-%, vorzugsweise 0 bis 65 Gew.-%, bezogen auf die Präparation eingesetzt. In den Fällen, in denen zusätzlich Farbmittel in den Pigmentpräparationen enthalten sind, ist es vorteilhaft, den Anteil des Pigmentes a) gering zu halten. Die vorteilhaften Eigenschaften, insbesondere die verbesserte Lichtechtheit gegenüber üblichen Ink-Jet-Tinten ohne die Komponente a) ist deutlich besser schon bei einem Verhältnis von Farbmittel e) zu Pigment a) von 0,05 bis 10, vorzugsweise von 0,2 bis 5.

Als besonders bevorzugte Farbmittel sind in diesem Zusammenhang Ruße sowie schwarze, wasserlösliche Farbstoffe bzw. die aus EP-A-356 980 (insbesondere Beispiele 1 und 2) und aus US-A-4 963 189 zu nennen.

Die Erfindung betrifft daher auch Pigmentpräparationen, enthaltend wenigstens ein Pigment der Komponente a), wenigstens ein Dispergiermittel, vorzugsweise solche der oben beschriebenen Komponente b), Wasser sowie ein von a) verschiedenes Farbmittel e) aus der Gruppe der organischen und anorganischen Pigmente und Ruß.

Weiterhin kann die Pigmentpräparation z.B. bei Verwendung als Drucktinte für den Ink-Jet-Druck Mittel zur Einstellung der Viskosität der Tinte enthalten wie beispielsweise Polyvinylalkohol, Polyvinylpyrrolidon, Methylcellulose u.a. dem Fachmann bekannte Mittel, soweit sie die Stabilität der Drucktinte, das Druckverhalten und das Trocknungsverhalten auf Papier nicht negativ beeinflussen.

Grundsätzlich können die Pigmentpräparationen noch Zusätze enthalten wie Konservierungsmittel (Biozide), weitere Netzmittel oder Tenside, Abstandshalter, Mattierungsmittel, Stabilisatoren, weitere UV-Absorber, Weichmacher, Gleitmittel und gegebenenfalls pH-Regler.

Heike

Geeignete Biozide sind z.B. Isothiazolone und Benzisothiazolone.

Geeignete Abstandshalter oder Mattierungsmittel haben mittlere Teilchendurchmesser, insbesondere im Bereich von 0,2 μm bis 30 μm und sind beispielsweise in DE 3 331 542 beschrieben. Die Abstandshalter sind vorzugsweise wasserunlöslich und beständig gegen die in den Tinten verwendeten Lösungsmittelzusätze. Beispiele für geeignete Abstandshalter oder Mattierungsmittel sind Polymethylmethacrylat, Polystyrol, Styrol-Divinylbenzol-Copolymer, vernetztes Polymethylmethacrylat, vernetztes oder unvernetztes Polyvinyltoluol.

Geeignete Stabilisatoren sind o-, m- und p-Dihydroxybenzole, Hydroxychromane, 5-Hydroxycumarane, Spirochromane, Spiroindane, p-Alkoxyphenole, sterisch gehinderte Phenole, Gallussäurederivate, Methylendioxybenzole, Aminophenole, Aminoaniline, sterisch gehinderte Amine, Derivate mit veresterten oder veretherten phenolischen Hydroxylgruppen bzw. Derivate mit acylierten oder alkylierten aromatischen Aminogruppen, Metallkomplexe.

Insbesondere kommen als Stabilisatoren sterisch gehinderte Amine infrage, vorzugsweise Verbindungen auf Basis von 2,2,6,6-Tetraalkylpiperidin, besonders bevorzugt Verbindungen auf Basis von 2,2,6,6-Tetraalkylpiperidin, die mindestens ein kovalent gebundenes 2,2,6,6-Tetraalkylpiperidinfragment enthalten.

In vielen Fällen hat sich der Einsatz bestimmter Kombinationen von Farbbildstabilisatoren als besonders wirkungsvoll erwiesen.

Geeignete UV-Absorber sind beispielsweise in DE 195 03 885 beschrieben.

Weichmacher und Gleitmittel werden beispielsweise core-shell-Latices mit einem weichen Kern und einer harten Hülle, Latices, die aus einem weichen Kern und einer Hülle aus vernetzter Gelatine bestehen sowie mit weichen Zwischenschichten verwendet.

Beispiele für pH-Regler sind NaOH, Ammoniak oder Aminomethylpropanol, N,N-Dimethylaminoethanol.

Beispiele für Konservierungsmittel sind Methyl- und Chlormethyl-isothiazolin-3-on, Benzisothiazolin-3-on oder Mischungen davon.

Als weitere besonders Ausgestaltung der Erfindung sind die erfindungsgemäßen Pigmentpräparationen zu nennen enthaltend neben den Komponenten a) und b) und gegebenenfalls c) und d) zusätzlich sterisch gehinderte Amine, vorzugsweise solche auf Basis von 2,2,6,6-Tetraalkylpiperidin, besonders bevorzugt auf Basis von 2,2,6,6-Tetraalkylpiperidin, die mindestens ein kovalent gebundenes 2,2,6,6-Tetraalkylpiperidinfragment enthalten.

Die erfindungsgemäßen Pigmentpräparationen enthalten vorzugsweise

a) 0,05 bis 80 Gew.-%, vorzugsweise 0,1 bis 30 Gew.-%, besonders bevorzugt 0,5 bis 20 Gew.-% wenigstens eines Pigmentes der Komponente a), bezogen auf die Präparation,

b) 0,1 bis 200 Gew.-%, insbesondere 0,5 bis 100 Gew.-% Dispergiermittel der Komponente b), bezogen auf die eingesetzte Pigmentmenge von a),

c) 10 bis 99 Gew.-%, insbesondere 30 bis 98 Gew.-% Wasser, bezogen auf die Pigmentpräparation sowie

d) 0 bis 40 Gew.-%, insbesondere 1 bis 40 Gew.-%, vorzugsweise 2 bis 20 Gew.-% wenigstens eines organischen Lösungsmittels, bezogen auf die Pigmentpräparation.

In einer bevorzugten Zusammensetzung handelt es sich bei der Komponente a) um TiN, ZrN, TiC oder SiC, besonders bevorzugt um TiN oder TiC als tiefschwarz färbendes Pigment.

Die Erfindung betrifft weiterhin die Herstellung der Pigmentpräparationen als Drucktinten für den Ink-Jet-Druck, die dadurch gekennzeichnet ist, daß man das Pigment der Komponente a) in nanokristalliner Form und gegebenenfalls mitzuverwendendes Farbmittel e) mit wenigsstens einem Teil des Dispergiermittels (b) und gegebenenfalls weiteren Zusätzen homogenisiert und gegebenenfalls trocken- oder naßzerkleinert.

Erfindungsgemäß umfaßt die Herstellung der Pigmentpräparationen gegebenenfalls eine Oberflächenmodifizierung von Pigmenten der Komp. a) in Wasser und/oder polarem organischem Lösungsmittel, um die aus der Pigmentherstellung erhaltenen „Rohpigmente" in die gewünschte Feinverteilung zu überführen und zu desagglomerieren bzw. zu desaggregieren. Verfahren hierzu sind beispielsweise in EP-0 650 945 A2 beschrieben.

Eine weitere Möglichkeit zur Desagglomerierung von Pigmenten der Komp. a) besteht in einer Vorbehandlung der Pigmentpulver mittels verdünnter bis halbkonzentrierter Ammoniaklösung.

Die Vorbehandlung der Pigmente der Komponente a) kann jedoch auch in konzentriertem $NH_3$ durch Erhitzen unter Rückfluß erfolgen, und anschließend kann eine Trocknung bei Temperaturen von 50 bis 250°C erfolgen.

Eine weitere Möglichkeit der Vorbehandlung der Pigmente der Komponente a) ist die Mahlung zusammen mit wenigstens einem Teil des polymeren Dispergiermitels (b) beispielsweise in einer 2-Walzenmahlvorrichtung.

Erfindungsgemäß können Pigmentpräparationen enthaltend die Komp. a) sowie Pigmentpräparationen enthaltend Pigmente oder beispielsweise wasserunlösliche Farbmittel der Komp. e) alleine zunächst separat hergestellt werden und im Anschluß daran zu der gewünschten Pigmentpräparation gemischt werden.

Im allgemeinen wird das Pigment (Komp. a), gegebenenfalls nach Oberflächenmodifizierung, zusammen mit den gegebenenfalls mitzuverwendenden wasserunlöslichen Farbmitteln (Pigmente) (e) in Pulverform oder in Form der wasserfeuchten Preßkuchen zusammen mit einem Teil des Dispergiermittels und Wasser, vorzugsweise deionisiertem Wasser, zu einer homogenen Mahlsuspension beispielsweise mittels Rührwerksbütte, Dissolver und ähnlichen Aggregaten gegebenenfalls nach einer Vorzerkleinerung angeschlagen (d.h. eingebracht und homogenisiert).

Die Mahlsuspension kann außerdem Anteile niedrigsiedender Lösungsmittel (Siedepunkt <150°C) enthalten, die im Verlauf der anschließenden Feinmahlung durch Verdampfung ausgetragen werden können. Sie kann aber auch Anteile höhersiedender Lösungsmittel oder weiterer Zusätze, wie sie oben beschrieben sind z.B. Mahlhilfs-, Entschäumungs- oder Benetzungsmittel, enthalten.

Die Naßzerkleinerung der Komp. a) oder gegebenenfalls der Komp. e), oder gemeinsam a) + e) umfaßt sowohl die Vorzerkleinerung als auch die Feinmahlung. Vorzugsweise liegt die Pigmentkonzentration der Suspension dabei oberhalb der gewünschten Konzentration der fertigen Pigmentpräparation bzw. Drucktinte. Die gewünschte Pigmentendkonzentration wird vorzugsweise im Anschluß an die Naßzerkleinerung eingestellt. Im Anschluß an die Vorzerkleinerung erfolgt eine Mahlung auf die gewünschte Partikelfeinverteilung. Für diese Mahlung kommen Aggregate wie z.B. Kneter, Walzenstühle, Knetschnecken, Kugelmühlen, Rotor-Stator-Mühlen, Dissolver, Korundscheibenmühlen, Schwingmühlen und insbesondere schnelllaufende, kontinuierlich oder diskontinuierlich beschickte Rührwerkskugelmühlen mit Mahlkörpern mit einem Durchmesser von 0,1 bis 5 mm in Frage. Die Mahlkörper können dabei aus Glas, Keramik oder Metall, z.B. Stahl sein. Die Mahltemperatur liegt vorzugsweise im Bereich von 0 bis 250°C, in der Regel jedoch bei Raumtemperatur, insbesondere unterhalb des Trübungspunktes des eingesetzten Dispergiermittels der Komponente b) und des gegebenenfalls eingesetzten grenzflächenaktiven Mittels.

In einer ebenfalls bevorzugten Verfahrensweise kann die Mahlung teilweise oder vollständig in einem Hochdruckhomogenisator oder in einem sogenannten Strahldispergator (bekannt aus DE-A 19 536 845) erfolgen, wodurch der Gehalt an Mahlkörperabrieb in der Suspension bzw. die Abgabe von löslichen Stoffen aus den Mahlkörpern (z.B. Ionen aus Glaskörpern) auf ein Minimum reduziert bzw. vollständig vermieden werden kann.

In einem Verdünnungs-Schritt wird die erhaltene Pigmentpräparation in an sich bekannter Weise in Wasser gegebenenfalls mit den restlichen Dispergiermittelmengen und gegebenenfalls weiteren Zusätzen eingemischt und homogenisiert, sowie auf die gewünschte Pigmentendkonzentration bzw. Farbstärke der Präparation bzw. Drucktinte eingestellt. Hierbei kann gegebenenfalls noch ein Teil des Dispergiermittels zugesetzt werden, um beispielsweise eine Reagglomeration feiner Pigmentpartikel in der Verdünnung zu vermeiden.

Von besonderem Vorteil ist ein Verfahren zur Herstellung der Pigmentpräparationen, in dem im Mahlschritt zur Herstellung des Pigmentkonzentrates für die Stabilisierung ausreichend Dispergiermittel zur Verfügung gestellt wird. Im Anschluß daran oder nach Verdünnung mit Wasser wird in Lösung befindliches, nicht am Pigment adsorbiertes Dispergiermittel und/oder überschüssige grenzflächenaktive Mittel vorzugsweise entfernt und anschließend die gewünschte Pigmentpräparation durch Zugabe der restlichen Anteile der Pigmentpräparation eingestellt.

Ein Verfahren zur Entfernung von in Lösung befindlichem Dispergiermittel ist beispielsweise die Zentrifugation der Suspension und anschließendes Abdekantieren des Überstandes. Ebenso kommen Membran- oder Microfiltrationsverfahren in Betracht.

Ferner können andere Additive wie z.B. Polyurethan- oder Acrylpolymere zugesetzt werden, um gegebenenfalls die Wasserechtheit weiter zu verbessern. Diese können sowohl wasser-löslicher als auch wasser-emulgierbarer Art sein, oder in einer der in d) enthaltenen Komponenten löslich sein.

In einer bevorzugten Verfahrensweise erfolgt die Mischung und Homogenisierung der Pigmentpräparationen unter Verwendung eines Strahldispergators oder Hochdruckhomogenisators, um die Entstehung von Schaum zu unterbinden und mögliche Reagglomeration zu vermeiden.

Mit der Einstellung der gewünschten Pigmentpräparationen erfolgt auch die Einstellung auf die gewünschte Viskosität, Farbstärke, Farbton, Dichte und Oberflächenspannung der Tinte.

Vor Gebrauch der Pigmentpräparationen als Drucktinten werden die Tinten gegebenenfalls fein-filtriert beispielsweise mittels 0,5 bis 5 μm Membran- oder Glasfiltern.

Im allgemeinen werden die physikalischen Tinteneigenschaften auf die Verwendung in üblichen Tinenstrahl-Druckern eingestellt, wobei die Oberflächenspannung vorzugsweise 20 bis 70 mN/m und die Viskosität vorzugsweise kleiner als 20 mPa s, vorzugsweise 0,5 bis 10 mPa s betragen sollte.

Die erfindungsgemäß verwendeten sowie die erfindungsgemäßen Drucktinten liefern als Drucktinte im Ink-Jet-Druck verwendet Drucke mit ausgezeichneter Lichtechtheit und hoher optischer Dichte und besitzen darüber hinaus folgende Vorteile: hervorragende Dispersions- und Lagerstabilität in einem weiten Temperaturbereich, keine Verstopfung im Druckkopf (sog. Kogation oder Clogging), hohe Wasser- und Migrationsechtheit der Drucke auf unterschiedlichen Substraten, z.B. auf holzfreiem Papier, mittl. Papierqualität, geleimtem und beschichtetem Papier, polymeren Filmen, Transparentfolien für Overhead-Projektion, kein Ausbluten im Mehrfarbendruck, auch bei Verwendung zusammen mit Farbstoff-Tinten oder anderen pigmentierten Tinten.

Die oben beschriebenen Pigmentpräparationen werden beispielsweise als Drucktinten für den Ink-Jet-Druck verwendet.

Die Erfindung betrifft weiterhin ein Verfahren zur Auftragung von wäßrigen Pigmentpräparationen enthaltend wenigstens ein Pigment aus der Gruppe der Carbide, Nitride, Boride und Silicide der Elemente Ti, Zr, Hf, Si, Ge und Sn mit einer mittleren Primärteilchengröße von 0,1 bis 50 nm, auf Substrate mittels der Ink-Jet-Methode.

Diese wäßrigen Pigmentpräperationen enthalten vorzugsweise ein Dispergiermittel, insbesondere eines wie oben beschrieben. Bevorzugte Inhaltsstoffe sowie Mengenangaben entsprechen den oben angegebenen. Als bevorzugte Substrate sind dabei die oben bzw. unten angegebenen zu nennen.

Der Ink-Jet-Druck bzw. die Ink-Jet-Methode ist an sich bekannt und erfolgt im allgemeinen so, daß die Drucktinte in ein Aufnahmegefäß eines Tintenstrahl-Druckkopfes gefüllt wird und in kleinen Tröpfchen auf das Substrat gesprüht wird. Der Tintenausstoß in Tröpfchenform erfolgt dabei vorzugsweise über einen piezoelektrischen Kristall, eine beheizte Kanüle (Bubble- oder Thermo-Jet-Verfahren) oder mechanische Druckerhöhung, wobei Druck auf das Tintensystem ausgeübt wird und so Tintentropfen herausgeschleudert werden. Dabei werden die Tröpfchen aus einer oder mehreren kleinen Düsen gezielt auf das Substrat wie z.B. Papier, Holz, Textilien, Kunststoff oder Metall geschossen. Durch elektronische Aussteuerung werden die einzelnen Tröpfchen auf dem Substrat zu Schriftzeichen oder graphischen Mustern zusammengefaßt.

Möglich ist auch ein Verfahren, bei dem mittels elektrostatischer Ablenkung aus einem Tintenstrahl kleinste Volumina in Form von Tropfen auf ein Substrat gebracht werden.

**Beispiele**

**Beispiel 1:**

1,2 g Polyasparaginsäure (Molmasse 3.000 g/mol), wurden in 64 ml deionisiertem Wasser aufgelöst. Zu dieser Lösung wurden 16 g festes TiN (hergestellt nach dem CVR-Verfahren mit einer Primärpartikelverteilung von 0,5 - 30 nm) portionsweise unter intensiver Durchmischung (Magnetrührer) zugesetzt. Der pH-Wert wurde mit Salpetersäure auf 3,0 - 3,5 eingestellt und die Suspension 5 Minuten mittels Ultraschall behandelt (Leistung: 200 Watt). Anschließend wurde die Suspension über einen Rundfilter aus Celluloseacetat/Cellulosenitrat mit einer Porengröße von 0,45 nm (=Type HAWP® der Firma Millilpore) mit einer Glasfritte abgesaugt und der Filterkuchen 10 Stunden bei 70°C im Trockenschrank getrockhet.

10 g des so modifizierten TiN-Pulvers wurden in 50 ml einer Lösung aus 100 g PEG 1000 (Polyethylenglykol mit $\overline{M}_w$ = 1 000 g/mol), 50 g 2-Pyrrolidon, 6 g eines Alkylglycosids und 844 g deionisiertem Wasser aufgenommen und der pH-Wert mit halbkonzentrierter $NH_3$-Lösung auf pH = 6 eingestellt. Anschließend erfolgte eine 5 minütige Behandlung der Suspension mit einem Ultraschallfinger.

Zur Partikelcharakterisierung der Suspension wurde ein Aliquot mit der oben genannten Lösung verdünnt und der mittlere Partikeldurchmesser von TiN nach dem Verfahren der dynamischen Lichtstreuung (Streulichtverteilung) bestimmt. Es wurden 122 nm festgestellt. Mittels des Verfahrens der Ultrazentrifuge (Massenverteilung) wurden folgende Werte für die Massenverteilung ermittelt:

| $d_{10}$ | $d_{50}$ | $d_{90}$ |
|---|---|---|
| 46 nm | 72 nm | 107 nm |

(Dabei bedeutet $d_{10}$, daß 10 Gew.-% aller Partikel nicht größer als 46 nm sind, $d_{50}$ bedeutet, daß 50 Gew.-% aller Partikel nicht größer als 72 nm sind und $d_{90}$ bedeutet, daß 90 Gew.-% aller Partikel, nicht größer als 107 nm sind. Als Teilchen sind in diesem Zusammenhang sowohl Primärpartikel als auch Aggregate bzw. Agglomerate zu verstehen).

Es wurden keine Partikel mit einer Partikelgröße von oberhalb 500 nm gefunden.

## Beispiel 2:

1,2 g Polyacrylsäure (Molmasse 90.000) wurden in 64 ml deionisiertem Wasser aufgelöst. Zu dieser Lösung wurden 16 g festes TiN (hergestellt nach dem CVR-Verfahren mit einer Primärpartikelverteilung von 0,5 - 30 nm portionsweise unter intensiver Durchmischung (Magnetrührer) zugesetzt. Der pH Wert wurde mit Salpetersäure auf 3,0 - 3,5 eingestellt und die Suspension 5 Minuten mittels Ultraschall behandelt (Leistung: 200 Watt). Anschließend wurde die Suspension über einen Rundfilter aus Celluloseacetat/Cellulosenitrat mit einer Porengröße von 0,45 nm mit einer Glasfritte abgesaugt und der Filterkuchen 10 Stunden bei 70°C im Trockenschrank getrocknet.

10 g des so modifizierten TiN-Pulvers wurden in 50 ml einer Lösung aus 100 g PEG 1000, (Polyethylenglykol mit $\overline{M}_w$ = 1 000 g/mol), 50 g 2-Pyrrolidon, 6 g eines Alkylglycosids wie in Beispiel 1 und 844 g deionisiertem Wasser aufgenommen und der pH-Wert mit halbkonzentrierter $NH_3$-Lösung auf pH = 6 eingestellt. Anschließend erfolgte eine 5 minütige Behandlung der Suspension mit einem Ultraschallfinger.

Zur Partikelcharakterisierung der Suspension wurde ein Aliquot mit der oben genannten Lösung verdünnt und der mittlere Partikeldurchmesser (Streulichtverteilung) nach dem Verfahren der dynamischen Lichtstreuung bestimmt. Es wurden 131 nm festgestellt.

Mittels des Verfahrens der Ultrazentrifuge (Massenverteilung) wurden folgende Werte für die Massenverteilung der Partikel ermittelt:

| $d_{10}$ | $d_{50}$ | $d_{90}$ |
|---|---|---|
| 53 nm | 107 nm | 224 nm |

Es wurden keine Partikel mit einer Partikelgröße von über 500 nm gefunden.

Die nach den Beispielen 1 und 2 hergestellten TiN-Dispersionen wurden in eine handelsübliche Schwarzkartusche eines Hewlett-Packard-Druckers HP 560C eingefüllt. Es wurden Drucke auf Agfa-Normalpapier, HP-Spezialpapier und HP-Transparentfolien vorgenommen. Die Druckdüsen zeigten über einen längeren Zeitraum keine Verstopfungen. In allen Fällen konnten tief-schwarze Druckbilder mit hoher optischer Dichte sowie ausgezeichneter Wasser- und Markerechtheit erreicht werden.

## Patentansprüche

1. Pigmentpräparationen enthaltend

   a) wenigstens ein Pigment aus der Gruppe der Carbide, Nitride, Boride und Silicide der Elemente Ti, Zr, Hf, Si, Ge und Sn mit einer mittleren Primärpartikelgröße von 0,1 bis 50 nm,

   b) wenigstens ein Dispergiermittel mit einem mittleren Molekulargewicht von $M_w > 1.000$ g/mol und

   c) Wasser.

2. Pigmentpräparationen gemäß Anspruch 1, dadurch gekennzeichnet, daß das Pigment der Komponente a), als Primärpartikel, Agglomerat, Aggregat und/oder als Mischung davon vorliegt, wobei die Agglomerate sowie Aggregate eine mittlere Partikelgröße von weniger als 500 nm, bevorzugt weniger als 150 nm besitzen.

3. Pigmentpräparationen gemäß Anspruch 1, dadurch gekennzeichnet, daß als Pigment der Komponente a) ZrN, TiN, TiC und/oder SiC eingesetzt wird.

4. Pigmentpräparationen gemäß Anspruch 1, dadurch gekennzeichnet, daß als Dispergiermittel der Komponente b) wasserlösliche oder wasseremulgierbare Homo- und Copolymerisate, Pfropf- und Pfropfcopolymerisate oder statistische Blockcopolymerisate, Polyethylenoxide, Polypropylenoxide, Polyoxymethylene, Polytrimethylenoxide, Polyvinylmethylether, Polyethylenimine, Polyacrylsäuren, Polyarylamide, Polymethacrylsäuren, Polymethacrylamide, Poly-N,N-dimethyl-acrylamide, Poly-N-isopropylacrylamide, Poly-N-acryl-glycinamide, Poly-N-methacryl-glycinamide, Polyvinylalkohole, Polyvinylacetate, Copolymere aus Polyvinylalkoholen und Polyvinylacetaten, Polyvinylpyrrolidon, Polyvinyloxazolidone, Polyvinylmethyloxazolidone, Cellulose, Stärke, Gelatine oder deren Derivate oder Polymere aus Aminosäureeinheiten, insbesondere Polylysin oder Polyasparaginsäure eingesetzt werden.

5. Pigmentpräparationen gemäß Anspruch 1, dadurch gekennzeichnet, daß als Dispergiermittel der Komponente b) Kondensationsprodukte von aromatischen Sulfonsäuren mit Formaldehyd, insbesondere Kondensationsprodukte aus Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit, Dispergiermittel aus der Gruppe der Sulfobernsteinsäureester, Alkylbenzolsulfonate, sulfatierte, alkoxylierte Fettsäurealkohole oder deren Salze, insbesondere solche mit 5 bis 120, vorzugsweise 5 bis 60, insbesondere mit 5 bis 30 Ethylenoxid versehene $C_6$-$C_{22}$-Fettsäurealkohole, die gesättigt oder ungesättigt sind, insbesondere Stearylalkohol, besonders bevorzugt ein mit 8 bis 10 Ethylenoxideinheiten alkoxylierter Stearylalkohol oder Kondensationsprodukte, die durch Umsetzung von Naphtholen mit Alkanolen, Anlagerung von Alkylenoxid und mindestens teilweiser Überführung der terminalen Hydroxygruppen in Sulfogruppen oder Halbester der Maleinsäure, Phthalsäure oder Bernsteinsäure erhältlich sind, eingesetzt werden.

6. Pigmentpräparationen, enthaltend

   a) wenigstens ein Pigment aus der Gruppe der Carbide, Nitride, Boride und Silicide der Elemente Ti, Zr, Hf, Si, Ge und Sn mit einer mittleren Primärpartikelgröße von 0,1 bis 50 nm,

   b) wenigstens ein Dispergiermittel mit einem mittleren Molekulargewicht von Mw kleiner gleich 1.000, ausgewählt

      aus der Gruppe der anionischen Dispergiermittel der Sulfobernsteinsäureester, Alkylbenzolsulfonate, sulfatierte, alkoxylierte Fettsäurealkohole oder deren Salze, Ethersulfate, Ethercarboxylate, Phosphatester, Sulfosuccinatamide, Paraffinsulfonate, Olefinsulfonate, Sarcosinate, Isethionate, Taurate, Ligninische Verbindungen, Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit sowie Kondensationsprodukte, die durch Umsetzung von Naphtholen mit Alkanolen, Anlagerung von Alkylenoxid und mindestens teilweiser Überführung der terminalen Hydroxygruppen in Sulfogruppen oder Halbester der Maleinsäure, Phthalsäure oder Bernsteinsäure erhältlich sind sowie Polymere aus Aminosäureeinheiten, insbesondere Polylysin oder Polyasparaginsäure,

      aus der Gruppe der kationischen Dispergiermittel, quarternäre Alkylammoniumverbindungen und Imidazole,

      aus der Gruppe der amphoteren Dispergiermittel der Glycinate, Propionate und Imidazoline und

      aus der Gruppe der nichtionischen Dispergiermittel der Alkoxylate, Alkylolamide, Ester, Aminoxide, Alkylpolyglykoside und Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, wie Styrol-Phenol-Kondensate, Carbonsäureamiden und Harzsäuren.

7. Pigmentpräparationen gemäß wenigstens einem der Ansprüche 1 oder 6, enthaltend zusätzlich wenigstens ein organisches Lösungsmittel, insbesondere eines ausgewählt aus der Gruppe:

   aliphatische $C_1$-$C_4$-Alkohole, wie Methanol, Ethanol, Isopropanol, n-Propanol, n-Butanol, Isobutanol oder tert.-Butanol, aliphatische Ketone, wie Aceton, Methylethylketon, Methylisobutylketon oder Diacetonalkohol, Polyole, wie Ethylenglykol, Propylenglykol, Butylenglykol, Diethylenglykol, Triethylenglykol, Trimethylolpropan, Polyethylenglykol mit einem mittleren Molgewicht von 100 bis 4000, vorzugsweise 400 bis 1500 g/mol oder Glycerin, Monohydroxyether, vorzugsweise Monohydroxyalkylether, besonders bevorzugt Mono-$C_1$-$C_4$-alkylglykolether wie Ethylenglykolmonoalkyl-, -monomethyl-, -diethylenglykolmonomethylether oder Diethylenglykolmonoethylether, Diethylenglykolmonobutylether, Dipropylenglykolmonoethylether, Thiodiglykol, Triethylenglykolmonomethylether oder -monoethylether, ferner 2-Pyrrolidon, N-Methyl-2-pyrrolidon, N-Ethyl-pyrrolidon, N-Vinyl-pyrrolidon, 1,3-Dimethyl-imidazolidon, Dimethylacetamid sowie Dimethylformamid oder deren Gemische.

8. Pigmentpräparationen gemäß wenigstens einem der Ansprüche 1 oder 6, enthaltend zusätzlich ein Farbmittel aus der Gruppe der organischen oder anorganischen Pigmente, Ruß oder der wasserunlöslichen oder wasserlöslichen Farbstoffe.

9. Pigmentpräparationen gemäß einem der Ansprüche 1 oder 6, enthaltend

    a) 0,05 bis 80 Gew.-%, vorzugsweise 0,1 bis 30 Gew.-%, besonders bevorzugt 0,5 bis 20 Gew.-% wenigstens eines Pigmentes der Komponente a), bezogen auf die Präparation,

    b) 0,1 bis 200 Gew.-%, insbesondere 0,5 bis 100 Gew.-% Dispergiermittel der Komponente b), bezogen auf die eingesetzte Pigmentmenge von a),

    c) 10 bis 98 Gew.-%, insbesondere 30 bis 98 Gew.-% Wasser, bezogen auf die Pigmentpräparation
    sowie

    d) 0 bis 40 Gew.-%, insbesondere 1 bis 40 Gew.-%, vorzugsweise 2 bis 20 Gew.-% wenigstens eines organischen Lösungsmittels, bezogen auf die Pigmentpräparation.

10. Pigmentpräparationen gemäß Anspruch 1 enthaltend zusätzlich ein sterisch gehindertes Amin, vorzugsweise ein Amin auf Basis von 2,2,6,6-Tetraalkylpiperidin, besonders bevorzugt auf Basis von 2,2,6,6-Tetraalkylpiperidin, das mindestens ein kovalent gebundenes 2,2,6,6-Tetraalkylpiperidinfragment enthält.

11. Pigmentpräparationen enthaltend

    a) wenigstens ein Pigment aus der Gruppe der Carbide, Nitride, Boride und Silicide der Elemente Ti, Zr, Hf, Si, Ge und Sn mit einer mittleren Primärpartikelgröße von 0,1 bis 50 nm,

    b) wenigstens ein Dispergiermittel

    c) Wasser und

    e) wenigstens ein von der Komponente a) verschiedenes Farbmittel aus der Gruppe der organischen und anorganischen Pigmente und Ruß.

12. Verfahren zur Auftragung von wäßrigen Pigmentpräperationen enthaltend wenigstens ein Pigment aus der Gruppe der Carbide, Nitride, Boride und Silicide der Elemente Ti, Zr, Hf, Si, Ge und Sn mit einer mittleren Primärpartikelgröße von 0,1 bis 50 nm, auf Substrate mittels der Ink-Jet-Methode.

13. Verwendung von wäßrigen Pigmentpräparationen gemäß den Ansprüchen 1,6 und 8 zur Herstellung von Drucktinten für den Ink-Jet-Druck.

**EP 0 915 137 A1**

Europäisches Patentamt

**EUROPÄISCHER RECHERCHENBERICHT**

Nummer der Anmeldung

EP 98 12 0205

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 622 429 A (CANON KABUSHIKI KAISHA) 2. November 1994 * Seite 4, Zeile 1 - Seite 9, Zeile 51; Ansprüche 1-13 * --- | 1 | C09D11/00 |
| A | US 5 538 549 A (KATO ET AL) 23. Juli 1996 * Spalte 2, Zeile 27 - Spalte 4, Zeile 27; Ansprüche 1,2 * --- | 1 | |
| A | EP 0 823 464 A (TOYO INK MANUFACTURING) 11. Februar 1998 * Seite 2, Zeile 46 - Seite 4, Zeile 42; Ansprüche 1,6,8 * --- | 1 | |
| D,A | EP 0 556 649 A (E.I. DU PONT DE NEMOURS) 25. August 1993 * Seite 2, Zeile 49 - Seite 6, Zeile 52 * --- | 1 | |
| D,A | US 5 472 477 A (KÖNIG) 5. Dezember 1995 * Spalte 1, Zeile 1 - Spalte 6, Zeile 29 * ----- | 1 | RECHERCHIERTE SACHGEBIETE (Int.Cl.6) C09D |

Der vorliegende Recherchenbericht wurde für alle Patentansprüche erstellt

| Recherchenort | Abschlußdatum der Recherche | Prüfer |
|---|---|---|
| DEN HAAG | 18. Januar 1999 | Bourgonje, A |

**ANHANG ZUM EUROPÄISCHEN RECHERCHENBERICHT
ÜBER DIE EUROPÄISCHE PATENTANMELDUNG NR.**                    EP 98 12 0205

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-01-1999

| Im Recherchenbericht angeführtes Patentdokument | | Datum der Veröffentlichung | Mitglied(er) der Patentfamilie | | Datum der Veröffentlichung |
|---|---|---|---|---|---|
| EP 622429 | A | 02-11-1994 | JP | 6306317 A | 01-11-1994 |
|  |  |  | JP | 6306318 A | 01-11-1994 |
|  |  |  | JP | 6322306 A | 22-11-1994 |
|  |  |  | JP | 6329964 A | 29-11-1994 |
| US 5538549 | A | 23-07-1996 | JP | 7331147 A | 19-12-1995 |
| EP 823464 | A | 11-02-1998 | JP | 9227812 A | 02-09-1997 |
|  |  |  | JP | 10060342 A | 03-03-1998 |
|  |  |  | WO | 9731072 A | 28-08-1997 |
| EP 556649 | A | 25-08-1993 | JP | 2675956 B | 12-11-1997 |
|  |  |  | JP | 7053841 A | 28-02-1995 |
|  |  |  | US | 5519085 A | 21-05-1996 |
| US 5472477 | A | 05-12-1995 | DE | 4214719 A | 11-11-1993 |
|  |  |  | IL | 105592 A | 05-12-1996 |
|  |  |  | JP | 6049514 A | 22-02-1994 |
|  |  |  | SE | 9301466 A | 05-11-1993 |

EPO FORM P0461

Für nähere Einzelheiten zu diesem Anhang : siehe Amtsblatt des Europäischen Patentamts, Nr.12/82